(19)

**Europäisches Patentamt**
**European Patent Office**
**Office européen des brevets**

(11)     **EP 4 371 943 A1**

(12)                          **EUROPEAN PATENT APPLICATION**

(43) Date of publication:
**22.05.2024   Bulletin 2024/21**

(21) Application number: **23162974.2**

(22) Date of filing: **20.03.2023**

(51) International Patent Classification (IPC):
**C01G 53/00** [(2006.01)]

(52) Cooperative Patent Classification (CPC):
**C01G 53/50; C01P 2006/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **21.11.2022   KR 20220156771**

(71) Applicant: **SK On Co., Ltd.**
**Seoul 03161 (KR)**

(72) Inventors:
• **LEE, Yoon Ji**
  **34124 Daejeon (KR)**
• **KIM, Seung Hyun**
  **34124 Daejeon (KR)**
• **KIM, Hong Ki**
  **34124 Daejeon (KR)**
• **KANG, Min Gu**
  **34124 Daejeon (KR)**

(74) Representative: **Stolmár & Partner**
**Patentanwälte PartG mbB**
**Blumenstraße 17**
**80331 München (DE)**

(54)     **CATHODE ACTIVE MATERIAL FOR LITHIUM SECONDARY BATTERY AND LITHIUM SECONDARY BATTERY INCLUDING THE SAME**

(57)     Embodiments of the present invention provide a cathode active material for a lithium secondary battery including lithium-transition metal composite oxide particles. The lithium-transition metal composite oxide particles have a (113) plane FWHM change rate of 75% or less, which is measured through in-situ X-ray diffraction (XRD) and defined by Equation 1. Thereby, lifespan characteristics of the lithium secondary battery may be improved by preventing a lattice structure and/or a crystal structure in lithium-transition metal composite oxide particles from being deformed.

**EP 4 371 943 A1**

**Description**

BACKGROUND OF THE INVENTION

1. Field of the Invention

The present invention relates generally to a cathode active material for a lithium secondary battery and a lithium secondary battery including the same. More specifically, the present invention relates to a lithium metal oxide-based cathode active material for a lithium secondary battery and a lithium secondary battery including the cathode active material.

2. Description of the Related Art

A secondary battery can be repeatedly charged and discharged. With the rapid progress of information, communication, and display industries, the secondary battery has been widely applied to various portable electronic devices such as camcorders, mobile phones, laptop computers. Recently, battery packs including a plurality of secondary batteries have also been developed and applied to eco-friendly automobiles such as fully electric or hybrid vehicles.

Examples of secondary battery types include a lithium secondary battery, a nickel-cadmium battery, a nickel-hydrogen battery and the like. Among them, the lithium secondary battery exhibits high operating voltage and high energy density per unit weight, and is generally advantageous because of fast charging speed and light weight. For this reason, a big part of present research and development efforts are focused on further improvements on lithium secondary batteries.

Generally, a lithium secondary battery may include an electrode assembly including a cathode, an anode, a separator disposed between the cathode and anode, and an electrolyte. The lithium secondary battery may further include a housing such as, for example, a pouch-shaped outer case in which the electrode assembly and the electrolyte are housed.

Although the lithium secondary batteries have already been used in many applications successfully, further improvements increasing their life-span, capacity, and operational stability are highly desirable for existing applications and also for expanding their use in new applications.

However, non-uniformity in the chemical structure of the metal composite oxide due to crystal structure distortions make it difficult to implement a lithium secondary battery having desired capacity and life-span. In addition, deformation or damage of the lithium-transition metal composite oxide structure caused during repeated charging and discharging also reduces the life-span stability and capacity retention characteristics of lithium secondary batteries.

Korean Patent Laid-Open Publication No. 10-2017-0093085 provides a cathode active material including a transition metal compound and an ion adsorption binder, but there is a limitation in securing sufficient life-span characteristics and stability.

SUMMARY OF THE INVENTION

An objective of the present invention is to provide a cathode active material for a lithium secondary battery having improved operational stability, life-span, and driving reliability.

Another objective of the present invention is to provide a lithium secondary battery including the cathode active material for a lithium secondary battery having improved operational stability, life-span, and driving reliability.

To achieve the above objectives, according to an aspect of the present invention, there is provided a cathode active material for a lithium secondary battery including: lithium-transition metal composite oxide particles having a (113) plane FWHM (Full Width at Half Maximum) change rate of 75% or less, which is measured through in-situ X-ray diffraction (XRD) and defined by Equation 1 below:

Equation 1

$$(113) \text{ plane FWHM change rate } (\%) = 100 \times \{(FWHM_{max} \ (113) - FWHM_{min} \ (113))/FWHM_{max} \ (113)\}$$

wherein in Equation 1, $FWHM_{max}$ (113) is a maximum FWHM value of a peak of (113) plane of the lithium-transition metal composite oxide particle measured through the in-situ XRD, and $FWHM_{min}$ (113) is a minimum FWHM value of the peak of (113) plane of the lithium-transition metal composite oxide particle measured through in-situ XRD.

In some embodiments, the (113) plane FWHM change rate may be 30 to 70%.

In some embodiments, a value of the $FWHM_{max}$ (113) may be greater than 0.200 and less than 0.510.

In some embodiments, a value of the $FWHM_{min}$ (113) may be 0.125 to 0.500.

In some embodiments, a change in the FWHM value of the peak of (113) plane of the lithium-transition metal composite oxide particle according to the charging and discharging of the lithium secondary battery may be measured in real time through the in-situ XRD.

In some embodiments, the lithium-transition metal composite oxide particles may include at least one doping element.

In some embodiments, the lithium-transition metal composite oxide particles may be represented by Formula 1 below:

$$\text{Formula 1} \qquad Li_xNi_aCo_bMn_cM_dO_{2+y}$$

wherein in Formula 1, M includes at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, and a, b, c, d, x and y are in a range of $0.8<x<1.5$, $0.30 \leq a \leq 0.70$, $0<b<0.20$, $0.02 \leq c \leq 0.50$, $0 \leq d \leq 0.05$, $0.98 \leq a+b+c \leq 1.02$, and $-0.1 \leq y \leq 0.1$, respectively.

In some embodiments, in Formula 1, a may be in a range of $0.50 \leq a \leq 0.70$.

In some embodiments, in Formula 1, b may be in a range of $0.03 \leq b \leq 0.15$.

In some embodiments, in Formula 1, a and b may satisfy $3 \leq a/b \leq 40$.

In some embodiments, in Formula 1, a and b may satisfy $4.5 \leq a/b \leq 10$.

In some embodiments, the lithium-transition metal composite oxide particles may have a (101) plane FWHM ratio of 300% or less, which is defined by Equation 3 below:

$$\text{Equation 3}$$

$$(101) \text{ plane FWHM ratio } (\%) = 100 \times (FWHM_{max} (101)/FWHM_{min} (101))$$

Wherein in Equation 3, $FWHM_{max}(101)$ is a maximum FWHM value of a peak of (101) plane of the lithium-transition metal composite oxide particle measured through the in-situ XRD, and $FWHM_{min}(101)$ is a minimum FWHM value of the peak of (101) plane of the lithium-transition metal composite oxide particle measured through in-situ XRD.

In some embodiments, the (101) plane FWHM ratio may be 250% or less.

According to another aspect of the present invention, there is provided a lithium secondary battery comprising a cathode including a cathode active material layer including the above-described cathode active material for a lithium secondary battery; and an anode disposed to face the cathode.

According to another aspect of the present invention, there is provided a cathode active material for a lithium secondary battery including:

The (113) plane FWHM change rate of the lithium-transition metal composite oxide particles included in the cathode active material according to the embodiments of the present invention measured through in-situ XRD may be 75% or less. Within the above range of the (113) plane FWHM change rate, it is possible to suppress a lattice structure and/or a crystal structure of the lithium-transition metal composite oxide particle from being distorted. In addition, cracks in the particles and side reactions in the electrode may be suppressed. Accordingly, an amount of gas generated in the lithium secondary battery may be reduced and life-span characteristics may be improved.

BRIEF DESCRIPTION OF THE DRAWINGS

The above and other objects, features and other advantages of the present invention will be more clearly understood from the following detailed description taken in conjunction with the accompanying drawings, in which:

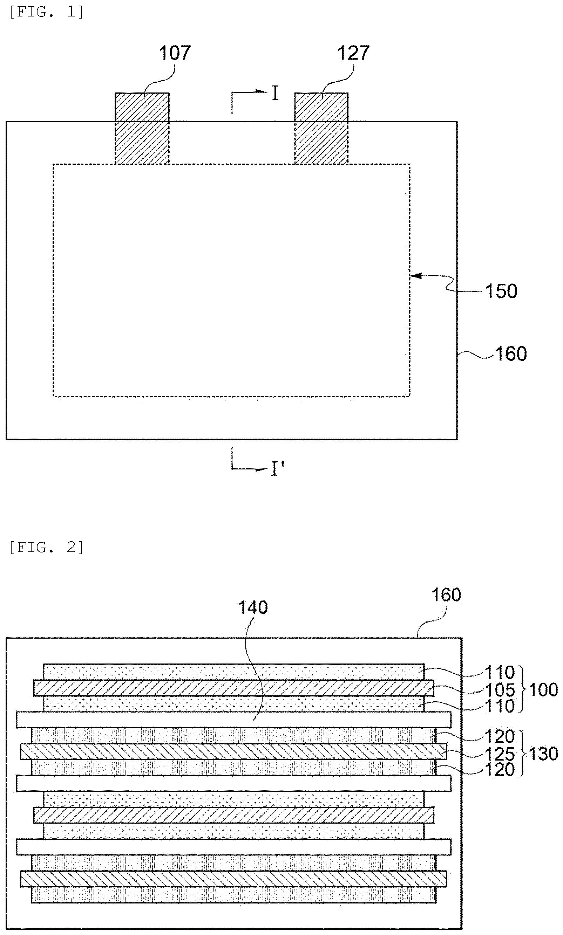

FIGS. 1 and 2 are a plan view and a cross-sectional view schematically illustrating a lithium secondary battery according to embodiments, respectively.

DETAILED DESCRIPTION OF THE INVENTION

Embodiments of the present invention provide a cathode active material including lithium-transition metal composite oxide particles and a lithium secondary battery including the same.

In embodiments, the cathode active material may include lithium-transition metal composite oxide particles.

For example, the lithium-transition metal composite oxide particle may have a single crystal or polycrystalline structure in crystallography.

According to some embodiments, the lithium-transition metal composite oxide particles include nickel (Ni) and cobalt (Co), and may further include manganese (Mn).

Nickel may be provided as a transition metal associated with output and capacity of the lithium secondary battery. Cobalt may serve to increase a degree of alignment of lithium and nickel in the lithium-transition metal composite oxide particles, help to form a layered structure, and secure initial rate characteristics of the battery.

In addition, life-span stability and capacity retention characteristics of the battery may be improved by manganese.

For example, a content of nickel in the lithium-transition metal composite oxide particles may be 30 to 70 mol%, 50 to 70 mol%, or 55 to 70 mol% based on a total number of atoms of all elements except for lithium and oxygen.

In addition, a content of cobalt in the lithium-transition metal composite oxide particles may be greater than 0 and less than 20 mol%, 1 to 19 mol%, 3 to 15 mol%, or 6 to 12 mol% based on the total number of atoms of all elements except for lithium and oxygen.

When the lithium-transition metal composite oxide particles include nickel and/or cobalt in the content within the above range, it is possible to prevent a crystal structure and/or a lattice structure of the lithium-transition metal composite oxide particles from being deformed while appropriately controlling the grain size and crystallinity thereof. Accordingly, life-span characteristics of the lithium secondary battery may be improved.

For example, the lithium-transition metal composite oxide particles may include a plurality of primary particles.

For example, a distortion of the lattice structures in the primary particles included in lithium-transition metal composite oxide particle or between the primary particles may occur according to charging and discharging of the lithium secondary battery. In this case, stress and strain inside the lithium-transition metal composite oxide particles may be increased. Accordingly, cracks may occur in the lithium-transition metal composite oxide particles, which may result in an increase in gas generation amount and a reduction in life-span characteristics of the lithium secondary battery.

For example, the distortion in the lattice structure and/or crystal structure described above may cause a shift of peak when measured through X-ray diffraction (XRD). In this case, as charge/discharge are performed, a width of each peak is changed and a full width at half maximum (FWHM) value may change. In embodiments of the present invention, the lithium-transition metal composite oxide particles have a (113) plane FWHM change rate of 75% or less, which is measured through the in-situ XRD and defined by Equation 1 below.

```
Equation 1
```

$$(113) \text{ plane FWHM change rate } (\%) = 100 \times \{(FWHM_{max} (113) - FWHM_{min} (113))/FWHM_{max} (113)\}$$

In Equation 1, $FWHM_{max}$ (113) is a maximum FWHM value of a peak of (113) plane of the lithium-transition metal composite oxide particle measured through the in-situ XRD. For example, $FWHM_{max}$ (113) may be the maximum FWHM value of the peak of (113) plane of the lithium-transition metal composite oxide particle measured through the in-situ XRD while charging and discharging the lithium secondary battery once.

In Equation 1, $FWHM_{min}$ (113) is a minimum FWHM value of the peak of (113) plane of the lithium-transition metal composite oxide particle measured through in-situ XRD. For example, $FWHM_{min}$ (113) may be the minimum FWHM value of the peak of (113) plane of the lithium-transition metal composite oxide particle measured through the in-situ XRD while charging and discharging the lithium secondary battery once.

For example, the $FWHM_{max}$ (113) may be a FWHM (113) value at a point where the deformation in the crystal structure of the lithium-transition metal composite oxide particle is greatest during charging and discharging.

For example, the $FWHM_{min}$ (113) may be a FWHM (113) value in a state before the deformation in the crystal structure of the lithium-transition metal composite oxide particle occurs.

For example, the in-situ XRD may be an equipment capable of observing a change in the crystal structure in real time during charging and discharging of the lithium secondary battery.

For example, a lithium secondary battery (e.g., coin cell) may be attached to one side of the in-situ XRD to assemble them. After performing formation charging-discharging (CC-CV 0.1C 4.3 V CUT-OFF 0.05C, CC 0.1C CUT-OFF 3.0 V) on the assembled lithium secondary battery, XRD analysis may be conducted in real time by performing charging and discharging again. The charging and discharging is performed under the same conditions as the formation charging-discharging, and analysis may be performed once every about 7 to 8 minutes.

According to one embodiment, X'Pert PRO (Panalytical Co.) may be used as the in-situ XRD.

For example, a change in the FWHM value of the peak in the (113) plane of the lithium-transition metal composite oxide particle according to the charging and discharging of the lithium secondary battery may be measured in real time through the in-situ XRD. Accordingly, a degree of distortion in the lattice structure and/or crystal structure of the lithium-transition metal composite oxide particle in the charging and discharging process may be evaluated in real time.

When the (113) plane FWHM change rate is 75% or less, it is possible to suppress the lattice structure and/or crystal structure of the lithium-transition metal composite oxide particle from being distorted. In addition, generation of cracks in the particles and side reactions in the electrode may be suppressed. Accordingly, an amount of gas generated in the lithium secondary battery may be reduced and life-span characteristics may be improved.

If the (113) plane FWHM change rate is greater than 75%, the amount of gas generated in the lithium secondary battery is increased, thereby battery stability may be deteriorated, and the capacity due to repeated cycles may be significantly decreased, thereby resulting in poor long-term durability.

In some embodiments, the (113) plane FWHM change rate may be 30 to 70%. For example, the (113) plane FWHM change rate may be 50 to 70% or 60 to 70%.

Within the above range of the (113) plane FWHM change rate, it is possible to prevent the crystal structure and/or lattice structure from being deformed while further appropriately controlling the grain size and crystallinity of the lithium-transition metal composite oxide particles. Accordingly, life-span characteristics of the lithium secondary battery may be further improved.

According to embodiments, the lithium-transition metal composite oxide particles may have a (113) plane FWHM ratio of 400% or less, which is measured through the in-situ XRD and defined by Equation 2 below.

$$\text{Equation 2}$$

$$(113) \text{ plane FWHM ratio } (\%) = 100 \times (\text{FWHM}_{max} \ (113)/\text{FWHM}_{min} \ (113))$$

In Equation 2, $\text{FWHM}_{min}$ (113) and $\text{FWHM}_{max}$ (113) are the same as defined in Equation 1.

According to some embodiments, the (113) plane FWHM ratio may be greater than 100% and 350% or less.

Within the above range of the (113) plane FWHM ratio, a change in the crystal structure of a cathode active material is suppressed, such that the side reaction with the electrolyte may be inhibited, and as a result, gas generation due to driving of the battery may be reduced. In addition, a change in the crystal structure of the cathode active material may be suppressed, thus to improve the stability of the electrode and extend the life-span of the battery.

In some embodiments, a value of the $\text{FWHM}_{max}$ (113) may be greater than 0 and 0.510 or less. In some embodiments, the value of the $\text{FWHM}_{max}$ (113) may be 0.200 to 0.510, 0.400 to 0.510, or 0.400 to 0.460.

In this case, it is possible to prevent the lattice structure and/or crystal structure of the lithium-transition metal composite oxide particle from being excessively deformed in the charging and discharging process. Accordingly, life-span characteristics and driving stability of the lithium secondary battery may be improved.

In some embodiments, a value of the $\text{FWHM}_{min}$ (113) may be 0.125 to 0.500. In some embodiments, the value of the $\text{FWHM}_{min}$ (113) may be 0.125 to 0.400, 0.140 to 0.300, 0.150 to 0.200, or 0.150 to 0.180.

In this case, it is possible to prevent the crystal structure and/or lattice structure of the lithium-transition metal composite oxide particles from being deformed while appropriately controlling the grain size and crystallinity thereof. Accordingly, life-span characteristics of the lithium secondary battery may be improved.

In some embodiments, the above-described lithium-transition metal composite oxide particles may include at least one doping element. In this case, the atoms of the doping element may be uniformly distributed in a lithium (Li) site or transition metal site of the lithium-transition metal composite oxide particles, thus to improve structural stability of the lithium-transition metal composite oxide particles during intercalation/deintercalation of lithium ions.

Accordingly, distortion and phase transition of the lattice structure and/or crystal structure of the lithium-transition metal composite oxide particle may be suppressed, and thereby the (113) plane FWHM change rate may be reduced. In some embodiments, the lithium-transition metal composite oxide particles may be represented by Formula 1 below.

$$\text{Formula 1} \qquad \text{Li}_x\text{Ni}_a\text{Co}_b\text{Mn}_c\text{M}_d\text{O}_{2+y}$$

In Formula 1, M includes at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, and a, b, c, d, x and y are in a range of $0.8<x<1.5$, $0.30\leq a\leq 0.70$, $0<b<0.20$, $0.02\leq c\leq 0.50$, $0\leq d\leq 0.05$, $0.98\leq a+b+c\leq 1.02$, and $-0.1\leq y\leq 0.1$, respectively.

For example, M be provided as the doping element.

Structural stability of the lithium-transition metal composite oxide particles represented by Formula 1 may be improved while preventing an excessive reduction in capacity of the cathode active material through a small amount of doping element. Accordingly, life-span characteristics of the lithium secondary battery may be improved.

In some embodiments, in Formula 1, a may be in a range of $0.50 \leq a \leq 0.70$ or $0.55 \leq a \leq 0.70$. Further, according to some embodiments, in Formula 1, b may be in a range of $0.01 \leq b \leq 0.19$, $0.03 \leq b \leq 0.15$ or $0.06 \leq b \leq 0.12$.

When including nickel and/or cobalt in the content within the above range, distortion of the lattice structure and/or crystal structure may be further reduced in the charging and discharging process.

In some embodiments, a molar ratio (a/b) of nickel to cobalt in Formula 1 may satisfy $3 \leq a/b \leq 40$. In some embodiments, the molar ratio (a/b) of nickel to cobalt in Formula 1 may satisfy $3 \leq a/b \leq 20$ or $4.5 \leq a/b \leq 10$.

In this case, since the content of cobalt is very low compared to the content of nickel, distortion in the lattice structure and/or crystal structure of the lithium-transition metal composite oxide particle may be further reduced in the charging and discharging process.

According to some embodiments, the lithium-transition metal composite oxide particles may have a (101) plane FWHM ratio of 300% or lesspreferably greater than 100% and 250% or less, which is defined by Equation 3 below.

$$\text{Equation 3}$$

$$(101) \text{ plane FWHM ratio } (\%) = 100 \times (\text{FWHM}_{max} (101)/\text{FWHM}_{min} (101))$$

In Equation 3, $\text{FWHM}_{max}(101)$ may be a maximum FWHM value of the peak of (101) plane of the lithium-transition metal composite oxide particle measured through the in-situ XRD. For example, $\text{FWHM}_{max}(101)$ may be the maximum FWHM value of the peak of (101) plane of the lithium-transition metal composite oxide particle measured through the in-situ XRD while charging and discharging the lithium secondary battery once.

In Equation 3, $\text{FWHM}_{min}(101)$ may be a minimum FWHM value of the peak of (101) plane of the lithium-transition metal composite oxide particle measured through the in-situ XRD. For example, $\text{FWHM}_{min}(101)$ may be the minimum FWHM value of the peak of (101) plane of the lithium-transition metal composite oxide particle measured through the in-situ XRD while charging and discharging the lithium secondary battery once.

For example, the $\text{FWHM}_{max} (101)$ may be a value of the FWHM (101) at a point where the deformation in the crystal structure of the lithium-transition metal composite oxide particle is greatest during charging and discharging.

For example, the $\text{FWHM}_{min} (101)$ may be a value of FWHM (101) in a state before the deformation in the crystal structure of the lithium-transition metal composite oxide particle occurs.

For example, a change in the FWHM value of the peak of (101) plane of the lithium-transition metal composite oxide particle according to the charging and discharging of the lithium secondary battery may be measured in real time through the in-situ XRD. Accordingly, a degree of distortion in the lattice structure and/or crystal structure of the lithium-transition metal composite oxide particle in the charging and discharging process may be evaluated in real time.

Within the above range of the (101) plane FWHM ratio, it is possible to suppress the lattice structure and/or crystal structure in the (101) plane of the lithium-transition metal composite oxide particle from being distorted. Accordingly, the distortion phenomenon may be further suppressed by controlling the deformation of the (113) plane and the (101) plane together.

According to some embodiments, the lithium-transition metal composite oxide particle may have a (101) plane FWHM change rate (%) of 20% to 65% defined by Equation 4 below.

$$\text{Equation 4}$$

$$(101) \text{ plane FWHM change rate } (\%) = 100 \times \{(\text{FWHM}_{max}(101) - \text{FWHM}_{min}(101))/\text{FWHM}_{max}(101)\}$$

In Equation 4, $\text{FWHM}_{min}(101)$ and $\text{FWHM}_{max}(101)$ are the same as defined in Equation 3.

According to some embodiments, the (101) plane FWHM change rate may be 40% to 65%.

Within the above range of (101) plane FWHM change rate, a change in the crystal structure of a cathode active material is suppressed, such that a side reaction with the electrolyte may be inhibited, and as a result, gas generation due to driving of the battery may be reduced. In addition, a change in the crystal structure of the cathode active material may be suppressed, thus to improve the stability of the electrode and extend the life-span of the battery.

In embodiments, the above-described lithium-transition metal composite oxide particles may be formed through a reaction between a lithium precursor and a transition metal precursor (e.g., a Ni-Co-Mn precursor).

For example, the transition metal precursor may be prepared through a co-precipitation of metal salts. The metal salts may include nickel salts, manganese salts and cobalt salts.

Examples of the nickel salt may include nickel sulfate, nickel nitrate, nickel acetate, and a hydrate thereof. Examples of the manganese salt may include manganese sulfate, manganese acetate, and a hydrate thereof. Examples of the cobalt salt may include cobalt sulfate, cobalt nitrate, cobalt carbonate, and a hydrate thereof.

The metal salts may be mixed with a precipitant and/or a chelating agent in a ratio satisfying the content of each metal or the concentration ratios described with reference to Formula 1 to prepare an aqueous solution. The aqueous solution may be coprecipitated in a reactor to prepare the transition metal precursor.

The precipitant may include an alkaline compound such as sodium hydroxide (NaOH), sodium carbonate ($Na_2CO_3$), but is not limited thereto. The chelating agent may include, for example, ammonium hydroxide (e.g., $NH_3H_2O$), ammonium carbonate (e.g., $NH_3HCO_3$), but is not limited thereto.

The temperature of the co-precipitation reaction may be controlled, for example, in a range of about 40 to 60 °C. The reaction time may be controlled in a range of about 24 to 72 hours.

For example, lithium-transition metal composite oxide particles may be prepared by reacting the transition metal precursor with the lithium precursor and a doping element source including the doping element. The lithium precursor compound may include, for example, lithium carbonate, lithium nitrate, lithium acetate, lithium oxide, lithium hydroxide, but is not limited thereto. These compounds may be used alone or in combination of two or more thereof.

For example, the doping element source may include titanium dioxide, titanium butoxide, manganese sulfate hydrate, aluminum hydroxide, magnesium hydroxide, zirconium hydroxide, zirconium dioxide, yttria-stabilized zirconia, tungsten oxide, but is not limited thereto. These may be used alone or in combination of two or more thereof.

Thereafter, metal particles may be fixed or crystallinity may be increased through a heat treatment (calcination) process. In one embodiment, the heat treatment may be performed at a temperature of about 600 to 1,000 °C.

Hereinafter, description of a lithium secondary battery including a cathode which includes the above-described cathode active material for a lithium secondary battery will be provided with reference to FIGS. 1 and 2.

Referring to FIGS. 1 and 2, the lithium secondary battery may include a cathode 100 including a cathode active material including a coating containing the above-described lithium-sulfur compound and metal hydroxide, and an anode 130 disposed to face the cathode 100.

The cathode 100 may include a cathode active material layer 110 formed by applying a cathode active material including the above-described lithium-transition metal oxide particles to a cathode current collector 105.

For example, a slurry may be prepared by mixing and stirring the cathode active material prepared by the manufacturing method with a binder, a conductive material, and/or a dispersant in a solvent. The slurry may be coated on at least one surface of the cathode current collector 105, followed by compressing and drying to manufacture the cathode 100.

The cathode current collector 105 may include, for example, stainless steel, nickel, aluminum, titanium, copper, or an alloy thereof, and preferably includes aluminum or an aluminum alloy.

The binder may be selected from, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming a cathode. In this case, an amount of the binder for forming the cathode active material layer 110 may be reduced and an amount of the cathode active material may be relatively increased, thereby improving the output and capacity of the secondary battery.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as $LaSrCoO_3$, and $LaSrMnO_3$.

The anode 130 may include an anode current collector 125 and an anode active material layer 120 formed by coating the anode current collector 125 with an anode active material.

The anode active material useable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at 1500 °C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing the anode active material with a binder, a conductive material and/or a dispersant in a solvent, followed by stirring the same. The slurry may be coated on the anode current collector 120, followed by drying and compressing to manufacture the anode 130.

As the binder and the conductive material, materials which are substantially the same as or similar to the above-described materials may be used. In some embodiments, a binder for forming an anode may include, for example, an aqueous binder such as styrene-butadiene rubber (SBR) for consistency with the carbon-based active material, and may be used together with a thickener such as carboxymethyl cellulose (CMC).

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

According to embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, or the like of the separation membrane 140.

The electrode assembly 150 may be housed in an outer case 160 together with an electrolyte to define the lithium secondary battery. According to embodiments, a non-aqueous electrolyte may be used as the electrolyte.

The non-aqueous electrolyte includes a lithium salt of an electrolyte and an organic solvent. The lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$ $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be used.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethylsulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

As illustrated in FIG. 1, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) extending or exposed to an outside of the outer case 160.

The lithium secondary battery may be manufactured, for example, in a cylindrical shape using a can, a square shape, a pouch type or a coin shape.

Hereinafter, examples are proposed to facilitate understanding of the present invention.

## Example 1

### (1) Preparation of lithium-transition metal composite oxide particles

$NiSO_4$, $CoSO_4$ and $MnSO_4$ were mixed in a molar ratio of 0.55:0.12:0.33, respectively, by using distilled water from which internal dissolved oxygen was removed by bubbling with $N_2$ for 24 hours. The mixed solution was introduced into a reactor at 50 °C, and NaOH as a precipitant and $NH_3H_2O$ as a chelating agent were added thereto, followed by performing co-precipitation for 48 hours to obtain $Ni_{0.55}Co_{0.12}Mn_{0.33}(OH)_2$ as a transition metal precursor. The obtained precursor was dried at 80 °C for 12 hours, and then again dried at 110 °C for 12 hours.

Lithium hydroxide and the transition metal precursor were added to a dry high-speed mixer in a ratio of 1.01:1, and was uniformly mixed for 5 minutes.

The mixture was put into a calcination furnace, and heated to 730 to 750 °C at a rate of 2 °C/min, then maintained at 730 to 750 °C for 10 hours. Oxygen was continuously passed at a flow rate of 20 L/min during heating and maintenance. After completion of the calcination, the mixture was naturally cooled to room temperature, followed by pulverization and classification to prepare lithium-transition metal composite oxide particles having a composition of $LiNi_{0.55}Co_{0.12}Mn_{0.33}O_3$.

### (2) Manufacture of lithium secondary battery

A lithium secondary battery was manufactured using the obtained lithium-transition metal composite oxide particles as a cathode active material.

Specifically, the cathode active materials, Denka Black as a conductive material and PVDF as a binder were mixed in a mass ratio composition of 97:2:1, respectively, to prepare a cathode slurry. The prepared cathode slurry was applied to an aluminum current collector, followed by drying and pressing to prepare a cathode.

An anode slurry, which includes 93 wt.% of natural graphite as an anode active material, 5 wt.% of KS6 as a flake type conductive material, 1 wt.% of styrene-butadiene rubber (SBR) as a binder, and 1 wt.% of carboxymethyl cellulose (CMC) as a thickener, was prepared. The anode slurry was applied to a copper substrate, followed by drying and pressing to prepare an anode.

The cathode and the anode prepared as described above were respectively notched in a predetermined size and stacked, then an electrode cell was fabricated by interposing a separator (polyethylene, thickness: 25 $\mu$m) between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more.

The electrolyte used herein was prepared by dissolving $LiPF_6$ in a mixed solvent of ethylene carbonate/ethyl methyl carbonate/diethyl carbonate (EC/EMC/DEC) (25/45/30; volume ratio) to have a concentration of 1M, then adding 1 wt.% of vinylene carbonate (VC), 0.5 wt.% of 1,3-propene sultone (PRS), and 0.5 wt.% of lithium bis(oxalato)borate (LiBOB) thereto.

Then, pre-charging was conducted on the secondary battery manufactured as described above with a current (5 A) corresponding to 0.25C for 36 minutes. After 1 hour, degassing then aging for 24 hours or more were conducted, followed by performing formation charging-discharging (charge condition: CC-CV 0.2C 4.2 V 0.05C CUT-OFF; discharge condition: CC 0.2C 2.5 V CUT-OFF).

## Example 2

A lithium-transition metal composite oxide and a lithium secondary battery were prepared according to the same procedures as described in Example 1, except that $NiSO_4$, $CoSO_4$ and $MnSO_4$ were added to have a composition of 0.6:0.1:0.3 when preparing the lithium-transition metal composite oxide.

Lithium-transition metal composite oxide particles having a composition of $LiNi_{0.6}Co_{0.1}Mn_{0.3}O_2$ were obtained.

## Example 3

A lithium-transition metal composite oxide and a lithium secondary battery were prepared according to the same procedures as described in Example 1, except that $NiSO_4$, $CoSO_4$ and $MnSO_4$ were added to have a composition of 0.7:0.1:0.2 when preparing the lithium-transition metal composite oxide.

Lithium-transition metal composite oxide particles having a composition of $LiNi_{0.7}Co_{0.1}Mn_{0.2}O_2$ were obtained.

## Example 4

A lithium-transition metal composite oxide and a lithium secondary battery were prepared according to the same procedures as described in Example 1, except that $NiSO_4$, $CoSO_4$ and $MnSO_4$ were added to have a composition of 0.55:0.06:0.39 when preparing the lithium-transition metal composite oxide.

Lithium-transition metal composite oxide particles having a composition of $LiNi_{0.55}Co_{0.06}Mn_{0.39}O_2$ were obtained.

## Comparative Example 1

A lithium-transition metal composite oxide and a lithium secondary battery were prepared according to the same procedures as described in Example 1, except that $NiSO_4$, $CoSO_4$ and $MnSO_4$ were added to have a composition of 0.5:0.2:0.3 when preparing the lithium-transition metal composite oxide.

Lithium-transition metal composite oxide particles having a composition of $LiNi_{0.5}Co_{0.2}Mn_{0.3}O_2$ were obtained.

## Comparative Example 2

A lithium-transition metal composite oxide and a lithium secondary battery were prepared according to the same procedures as described in Example 1, except that $NiSO_4$, $CoSO_4$ and $MnSO_4$ were added to have a composition of 0.75:0.02:0.23 when preparing the lithium-transition metal composite oxide.

Lithium-transition metal composite oxide particles having a composition of $LiNi_{0.75}Co_{0.02}Mn_{0.23}O_2$ were obtained.

**Comparative Example 3**

A lithium-transition metal composite oxide and a lithium secondary battery were prepared according to the same procedures as described in Example 1, except that $NiSO_4$, $CoSO_4$ and $MnSO_4$ were added to have a composition of 0.75:0.1:0.15 when preparing the lithium-transition metal composite oxide.

Lithium-transition metal composite oxide particles having a composition of $LiNi_{0.75}Co_{0.1}Mn_{0.15}O_2$ were obtained.

In the compositions of the lithium-transition metal composite oxide particles prepared in the examples and comparative examples are shown in Table 1 below in terms of molar ratio of Ni, Co and Mn.

[TABLE 1]

| Molar ratio | Ni | Co | Mn |
|---|---|---|---|
| Example 1 | 55 | 12 | 33 |
| Example 2 | 60 | 10 | 30 |
| Example 3 | 70 | 10 | 20 |
| Example 4 | 55 | 6 | 39 |
| Comparative Example 1 | 50 | 20 | 30 |
| Comparative Example 2 | 75 | 2 | 23 |
| Comparative Example 3 | 75 | 10 | 15 |

**Experimental example**

(1) Measurement of FWHM value of (113) plane peak

Each of the lithium secondary batteries of the examples and comparative examples was manufactured as a coin cell for in-situ measurement. After conducting a formation process by performing charging (CC-CV 0.1C 4.3 V 0.05C CUT-OFF) and discharging (CC 0.1C 3.0 V CUT-OFF) on each coin cell once, in-situ measurement was performed using X'Pert PRO, Empyren (Panalytical Co.) equipment as the in-situ XRD.

The coin cell was put into the in-situ XRD, then charging (CC-CV 0.1C 4.3 V 0.05C CUT-OFF) and discharging (CC 0.1C 3.0 V CUT-OFF) were performed once, respectively. Then, FWHM values of the (113) plane peak of the lithium-transition metal composite oxide particles were measured once every 7 minutes in each charging and discharging process.

The measured maximum FWHM value was defined as $FWHM_{max}$ (113) and the minimum FWHM value was defined as $FWHM_{min}$ (113), then (113) plane FWHM change rate and (113) plane FWHM ratio according to Equations 1 and 2 were calculated.

(2) Measurement of FWHM value of (101) plane peak

The lithium secondary batteries of the examples and comparative examples were put into the in-situ XRD described above in (1), then charging (CC-CV 0.1C 4.3 V 0.05C CUT-OFF) and discharging (CC 0.1C 3.0 V CUT-OFF) were performed once, respectively. Then, changes in FWHM values of the (101) plane peak of the lithium-transition metal composite oxide particles were measured once every 7 minutes in each charging and discharging process.

The measured maximum FWHM value was defined as $FWHM_{max}(101)$ and the minimum FWHM value as $FWHM_{min}(101)$, then (101) plane FWHM ratio and the (101) plane FWHM change rate according to Equations 3 and 4 were calculated.

(3) Measurement of gas generation amount

Charging (CC/CV 1C 4.2 V 0.1C CUT-OFF) and discharging (CC 1.0C 2.5 V CUT-OFF) were repeated on the lithium secondary batteries of the examples and comparative examples 500 times in a chamber at 45 °C. Then, after leaving at room temperature for 30 minutes, the batteries were placed in a chamber for measuring a gas generation amount. After making the chamber in a vacuum state, the chamber was filled with nitrogen gas to form normal pressure. At this time, a nitrogen volume ($V_0$) and a chamber internal pressure ($P_0$) were measured. After making the chamber in a vacuum state again, a hole was drilled in the battery, and a chamber internal pressure ($P_1$) was measured. Then, the gas generation amount was calculated according to an equation below.

$$\texttt{Gas generation amount (mL)} = (V_0/P_0) \times P1$$

(4) Measurement of capacity retention rate during repeated charging and discharging

Charging (CC/CV 1C 4.2 V 0.1C CUT-OFF) and discharging (CC 1.0C 2.5 V CUT-OFF) were repeated on the lithium secondary batteries of the examples and comparative examples 500 times in a chamber at 45 °C. Then, the capacity retention rate was evaluated as a percentage of the discharge capacity at 500 times divided by the discharge capacity at one time.

Measurement and evaluation results are shown in Tables 2 and 3 below.

[TABLE 2]

| Division | FWHM of (113) plane peak | | | | FWHM of (101) plane peak | | | |
|---|---|---|---|---|---|---|---|---|
| | FWHM$_{max}$ | FWHM$_{min}$ | FWHM change rate (%) | FWHM ratio (%) | FWHM$_{max}$ | FWHM$_{min}$ | FWHM ratio (%) | FWHM change rate (%) |
| Example 1 | 0.4203 | 0.1255 | 70 | 335 | 0.217 | 0.0938 | 231 | 57 |
| Example 2 | 0.5053 | 0.1754 | 65 | 288 | 0.229 | 0.0947 | 242 | 59 |
| Example 3 | 0.46 | 0.1674 | 64 | 275 | 0.22 | 0.0968 | 227 | 56 |
| Example 4 | 0.4237 | 0.1563 | 63 | 271 | 0.1678 | 0.0923 | 182 | 45 |
| Comparative Example 1 | 0.6074 | 0.13 | 79 | 467 | 0.2778 | 0.09 | 309 | 68 |
| Comparative Example 2 | 0.5121 | 0.1231 | 76 | 416 | 0.258 | 0.072 | 358 | 72 |
| Comparative Example 3 | 0.7402 | 0.1174 | 84 | 630 | 0.262 | 0.0842 | 311 | 18 |

[TABLE 3]

| Division | Gas generation amount (ml) | Capacity retention rate (%, 500cyc) |
|---|---|---|
| Example 1 | 43 | 73 |
| Example 2 | 25 | 94 |
| Example 3 | 21 | 89 |
| Example 4 | 15 | 83 |
| Comparative Example 1 | 61 | 68 |
| Comparative Example 2 | 55 | 60 |
| Comparative Example 3 | 68 | 67 |

Referring to Tables 2 and 3, since the (113) plane FWHM change rate according to Equation 1 of the lithium-transition metal composite oxide particles included in the batteries of the examples is 75% or less, the batteries of the examples had a gas generation amount significantly less than that of the batteries of the comparative examples, and secured a capacity retention rate of 70% or more.

In particular, it can be confirmed that the batteries of the examples, which include a lithium-transition metal composite oxide having a Ni content of 70 mol% or less and a Co content of less than 20 mol%, had improved battery performance compared to the batteries of the comparative examples in which the lithium-transition metal composite oxide includes an excessive amount of Ni, or a very small amount or excessive amount of Co.

**Claims**

1. A cathode active material for a lithium secondary battery comprising:

   lithium-transition metal composite oxide particles having a (113) plane FWHM change rate of 75% or less, which is measured through in-situ X-ray diffraction (XRD) and defined by Equation 1 below:

   Equation 1

   $$(113)\text{plane FWHM change rate } (\%) = 100 \times \{(\text{FWHM}_{max}(113) - \text{FWHM}_{min}(113))/\text{FWHM}_{max}(113)\}$$

   wherein $\text{FWHM}_{max}(113)$ is a maximum FWHM value of a peak of (113) plane of the lithium-transition metal composite oxide particle measured through the in-situ XRD, and $\text{FWHM}_{min}(113)$ is a minimum FWHM value of the peak of (113) plane of the lithium-transition metal composite oxide particle measured through in-situ XRD.

2. The cathode active material for a lithium secondary battery according to claim 1, wherein the (113) plane FWHM change rate is 30 to 70%.

3. The cathode active material for a lithium secondary battery according to claim 1 or 2, wherein a value of the $\text{FWHM}_{max}(113)$ is greater than 0.200 and less than 0.510.

4. The cathode active material for a lithium secondary battery according to one of claims 1 to 3, wherein a value of the $\text{FWHM}_{min}(113)$ is 0.125 to 0.500.

5. The cathode active material for a lithium secondary battery according to one of claims 1 to 4, wherein a change in the FWHM value of the peak in the (113) plane of the lithium-transition metal composite oxide particle according to the charging and discharging of the lithium secondary battery are measured in real time through the in-situ XRD.

6. The cathode active material for a lithium secondary battery according to one of claims 1 to 5, wherein the lithium-transition metal composite oxide particles include at least one doping element.

7. The cathode active material for a lithium secondary battery according to one of claims 1 to 6, wherein the lithium-transition metal composite oxide particles are represented by Formula 1 below:

   Formula 1            $Li_xNi_aCo_bMn_cM_dO_{2+y}$

   wherein M includes at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, and a, b, c, d, x and y are in a range of $0.8<x<1.5$, $0.30{\leq}a{\leq}0.70$, $0<b<0.20$, $0.02{\leq}c{\leq}0.50$, $0{\leq}d{\leq}0.05$, $0.98{\leq}a+b+c{\leq}1.02$, and $-0.1{\leq}y{\leq}0.1$, respectively.

8. The cathode active material for a lithium secondary battery according to claim 7, wherein in Formula 1, a is in a range of $0.50{\leq}a{\leq}0.70$.

9. The cathode active material for a lithium secondary battery according to claim 7 or 8, wherein in Formula 1, b is in a range of $0.03{\leq}b{\leq}0.15$.

10. The cathode active material for a lithium secondary battery according to one of claims 7 to 9, wherein in Formula 1, a and b satisfy $3{\leq}a/b{\leq}40$.

11. The cathode active material for a lithium secondary battery according to claim 10, wherein in Formula 1, a and b satisfy $4.5{\leq}a/b{\leq}10$.

12. The cathode active material for a lithium secondary battery according to one of claims 1 to 10, wherein the lithium-transition metal composite oxide particles have a (101) plane FWHM ratio of 300% or less, which is defined by Equation 3 below:

[Equation 3]

```
Equation 3

(101) plane FWHM ratio (%) = 100 × (FWHM_max (101)/FWHM_min

(101))
```

wherein in Equation 3, $FWHM_{max}(101)$ is a maximum FWHM value of a peak of (101) plane of the lithium-transition metal composite oxide particle measured through the in-situ XRD, and $FWHM_{min}(101)$ is a minimum FWHM value of the peak of (101) plane of the lithium-transition metal composite oxide particle measured through in-situ XRD.

**13.** The cathode active material for a lithium secondary battery according to claim 12, wherein the (101) plane FWHM ratio is 250% or less.

**14.** A lithium secondary battery, comprising:

a cathode 100 comprising a cathode active material layer comprising the cathode active material for a lithium secondary battery according to one of claims 1 to 14; and
an anode 130 disposed to face the cathode.

[FIG. 1]

[FIG. 2]

Europäisches
Patentamt

European
Patent Office

Office européen
des brevets

# EUROPEAN SEARCH REPORT

Application Number

EP 23 16 2974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 535 829 B2 (SHIZUKA KENJI [JP]; OKAHARA KENJI [JP] ET AL.) 17 September 2013 (2013-09-17) | 5-14 | INV. C01G53/00 |
| Y | * figure all; examples 1-7 * | 1-14 | |
| X | US 2011/003200 A1 (SHIZUKA KENJI [JP] ET AL) 6 January 2011 (2011-01-06) | 5-14 | |
| Y | * figure all; examples 1-5 * | 1-14 | |
| X | JP 4 613943 B2 (MITSUBISHI CHEM CORP) 19 January 2011 (2011-01-19) | 5-14 | |
| Y | * example all * | 1-14 | |
| X | US 8 962 195 B2 (SHIZUKA KENJI [JP]; TERADA KAORU [JP] ET AL.) 24 February 2015 (2015-02-24) | 5-14 | |
| Y | * column 65 – column 68; examples 1-7 * | 1-14 | |
| X | JP 2010 278015 A (MITSUBISHI CHEM CORP) 9 December 2010 (2010-12-09) | 5-14 | TECHNICAL FIELDS SEARCHED (IPC) |
| Y | * claim 1; examples 1-4 * | 1-14 | C01G |

The present search report has been drawn up for all claims

| Place of search | Date of completion of the search | Examiner |
|---|---|---|
| Munich | 13 September 2023 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## EP 4 371 943 A1

ANNEX TO THE EUROPEAN SEARCH REPORT
ON EUROPEAN PATENT APPLICATION NO.

EP 23 16 2974

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | | Publication date | Patent family member(s) | | Publication date |
|---|---|---|---|---|---|
| US 8535829 | B2 | 17-09-2013 | CN | 102044672 A | 04-05-2011 |
| | | | CN | 102044673 A | 04-05-2011 |
| | | | EP | 2006937 A2 | 24-12-2008 |
| | | | KR | 20080108222 A | 12-12-2008 |
| | | | US | 2009104530 A1 | 23-04-2009 |
| | | | WO | 2007116971 A1 | 18-10-2007 |
| US 2011003200 | A1 | 06-01-2011 | CN | 101536220 A | 16-09-2009 |
| | | | CN | 101997114 A | 30-03-2011 |
| | | | CN | 101997115 A | 30-03-2011 |
| | | | EP | 2110872 A1 | 21-10-2009 |
| | | | EP | 2337125 A1 | 22-06-2011 |
| | | | EP | 2341570 A1 | 06-07-2011 |
| | | | JP | 4466787 B2 | 26-05-2010 |
| | | | JP | 4475326 B2 | 09-06-2010 |
| | | | JP | 2008270161 A | 06-11-2008 |
| | | | JP | 2009164140 A | 23-07-2009 |
| | | | JP | 2009289758 A | 10-12-2009 |
| | | | KR | 20090092268 A | 31-08-2009 |
| | | | KR | 20140091776 A | 22-07-2014 |
| | | | US | 2011003200 A1 | 06-01-2011 |
| | | | US | 2016301071 A1 | 13-10-2016 |
| | | | WO | 2008078695 A1 | 03-07-2008 |
| JP 4613943 | B2 | 19-01-2011 | JP | 4613943 B2 | 19-01-2011 |
| | | | JP | 2008305777 A | 18-12-2008 |
| | | | JP | 2011003551 A | 06-01-2011 |
| US 8962195 | B2 | 24-02-2015 | CN | 101796672 A | 04-08-2010 |
| | | | CN | 102769130 A | 07-11-2012 |
| | | | EP | 2202828 A1 | 30-06-2010 |
| | | | EP | 2466671 A2 | 20-06-2012 |
| | | | KR | 20100063041 A | 10-06-2010 |
| | | | US | 2010209771 A1 | 19-08-2010 |
| | | | WO | 2009031619 A1 | 12-03-2009 |
| JP 2010278015 | A | 09-12-2010 | NONE | | |

EPO FORM P0459

For more details about this annex : see Official Journal of the European Patent Office, No. 12/82

**EP 4 371 943 A1**

**REFERENCES CITED IN THE DESCRIPTION**

**Patent documents cited in the description**

- KR 1020170093085